# EUROPÄISCHE PATENTSCHRIFT

(11) **EP 0 769 122 B1**
(45) Veröffentlichungstag und Bekanntmachung des Hinweises auf die Patenterteilung: **04.08.1999**
(21) Anmeldenummer: 96914845.1
(22) Anmeldetag: 06.05.1996
(51) Int. Cl.: F25B 9/14, F02G 1/04

(54) **Abgaswärmenutzung bei regenerativen Wärme- und Kältemaschinen**
Utilising the exhaust gas heat in regenerative heating and cooling machines
Exploiter la chaleur des gaz brûlés dans des machines thermiques et frigorifiques à régénérateur

(30) Priorität: 05.05.1995 DE 19516499
(43) Veröffentlichungstag der Anmeldung: 23.04.1997
(73) Patentinhaber: ROBERT BOSCH GMBH, 70442 Stuttgart (DE); Viessmann Werke GmbH & Co, 35108 Allendorf (DE)
(72) Erfinder: HOFBAUER, Peter, D-51503 Rösrath (DE); HEIKRODT, Klaus, D-47829 Krefeld (DE); STRAUSS, Rolf-Peter, D-35066 Frankenberg (DE); THOMAS, Bernd, D-52070 Aachen (DE)
(86) Internationale Anmeldenummer: DE9600787
(87) Internationale Veröffentlichungsnummer: WO9635086

(56) Entgegenhaltungen:
- WO-A-92/15826
- WO-A-93/18354
- DE-A- 4 328 993
- US-A- 4 245 477
- US-A- 4 345 426

## Beschreibung

Die Erfindung betrifft ein Verfahren zur Nutzung der im Abgas der Brennkammer einer nach einem regenerativen Gaskreisprozeß arbeitenden Wärme- und Kältemaschine enthaltenen Wärme durch Vorwärmen der der Brennkammer zugeführten Verbrennungsluft, wobei das aus dem heißen Arbeitsvolumen verdrängte bzw. diesem Arbeitsvolumen zugeführte Prozeßgas einen Regenerator durchströmt, der innerhalb eines druckfesten Gehäuses im Bereich des heißen Kolbens angeordnet ist. Ferner betrifft die Erfindung eine entsprechende Wärme- und Kältemaschine.

Nach einem regenerativen Gaskreisprozeß, beispielsweise nach dem Stirling- oder Vuilleumier-Kreisprozeß arbeitende Wärme-und Kältemaschinen sind seit langer Zeit bekannt, beispielsweise aus der GB-PS 136 195. Derartige Maschinen haben zwei in einem druckdichten Gehäuse linear bewegliche Kolben, die gemeinsam ein warmes Arbeitsvolumen begrenzen und von denen der eine Kolben im Gehäuse ein heißes, mit Wärme beaufschlagtes Arbeitsvolumen und der anderen Kolben ein kaltes Arbeitsvolumen begrenzt, wobei die drei Arbeitsvolumina unter Zwischenschaltung von Regeneratoren und Wärmeübertragern miteinander verbunden sind und ein Antrieb und/oder eine Steuerung für die Kolben vorgesehen ist.

Trotz der unbestreitbaren Vorteile der nach einem regenerativen Gaskreisprozeß arbeitenden Wärme- und Kältemaschinen haben diese bisher keinen Eingang in die Praxis gefunden, und zwar hauptsächlich wegen konstruktiver Schwierigkeiten, die die Realisierung der theoretischen Vorteile derartiger Maschinen in der Praxis bisher verhinderten.

Um den Wirkungsgrad der nach einem regenerativen Gaskreisprozeß arbeitenden Wärme- und Kältemaschinen zu verbessern, ist es bekannt, die im Abgas der Brennkammer enthaltene Wärme durch Vorwärmen der der Brennkammer zugeführten Verbrennungsluft zu nutzen [siehe WO 93/18354]. Zu diesem Zweck wurde im druckfesten Gehäuse der Maschine ein zusätzlicher Wärmetauscher angeordnet; außerdem wurde das Gehäuse gegen Wärmestrahlung und Wärmeleitung mit aufwendigen Isolierungen versehen.

Der Erfindung liegt die **Aufgabe** zugrunde, das Verfahren der eingangs beschriebenen Art zur Nutzung der im Abgas der Brennkammer einer nach einem regenerativen Gaskreisprozeß arbeitenden Wärme- und Kältemaschine enthaltenen Wärme derart weiterzubilden, daß eine Verbrennungsluftvorwärmung ohne die Bereitstellung eines zusätzlichen Volumens für einen Wärmetauscher und für Isolierungen des Gehäuses im Bereich der mit dem heißen Arbeitsvolumen verbundenen Regeneratoren und Wärmeübertrager möglich ist.

Die **Lösung** dieser Aufgabenstellung durch das erfindungsgemäße Verfahren ist dadurch gekennzeichnet, daß unter Aufrechterhaltung des für den Betrieb des Regenerators benötigten Temperaturprofils die Verbrennungsluft zu der dem unteren Teil des Temperaturprofils des Regenerators entsprechenden Kühlung der den unteren Teil des Regenerators umgebenden Druckbehälterwand herangezogen wird und daß zur Aufrechterhaltung des für den Regeneratorbetrieb erforderlichen oberen Teils des Temperaturprofils der obere Teil der den Regenerator umgebenden Druckbehälterwand vom Abgas umströmt wird, wobei gleichzeitig in diesem Bereich dem Abgas Wärme durch die an der Außenseite des Abgasstromes im Gegenstrom geführte Verbrennungsluft entzogen wird.

Mit dem erfindungsgemäßen Verfahren erfolgt eine optimale Nutzung der im Abgas der Brennkammer enthaltenen Wärme durch Vorwärmen der der Brennkammer zugeführten Verbrennungsluft, ohne daß für diese Wärmeübertragung zusätzliche Wärmetauscher oder Isolierungen verwendet werden, weil die Kühlung des Regenerators im unteren Teil seines Temperaturprofils durch unmittelbare Beaufschlagung der diesen Teil des Regenerators umgebenden Druckbehälterwand mit der kalten Verbrennungsluft erfolgt. Durch die Kühlung dieses Teils der Druckbehälterwand werden gleichzeitig Wärmeverluste durch Wärmeleitung vermieden, die sich ohne diese unmittelbare Kühlung aufgrund der Ableitung der Wärme von der das heiße Arbeitsvolumen umgebenden Druckbehälterwand in Richtung der kälteren, das warme Arbeitsvolumen umgebenden Druckbehälterwand ergeben würden. Um den für den Regeneratorbetrieb erforderlichen oberen Teil des Temperaturprofils des Regenerators aufrechtzuerhalten, wird der obere Teil der den Regenerator umgebenden Druckbehälterwand vom Abgas umströmt. Im oberen Teil des Temperaturprofils findet somit keine unmittelbare Kühlung der den Regenerator umgebenden Druckbehälterwand statt. Statt dessen entzieht in diesem Bereich die der Brennkammer zugeführte, bereits erwärmte Verbrennungsluft dem im Gegenstrom strömenden Abgas dadurch Wärme, daß die Verbrennungsluft die Außenseite des Abgasstromes umströmt. In diesem, den oberen Teil des Temperaturprofils des Regenerators bildenden Teil der Druckbehälterwand wird diese somit vom Abgasstrom beaufschlagt, der seinerseits auf seiner Außenseite von der Verbrennungsluft umströmt wird. In einem den Parametern entsprechend festzulegenden Bereich des Regenerators wechselt somit die Beaufschlagung der Druckbehälterwand einerseits durch Verbrennungsluft, und andererseits durch Abgas, wozu es in der Praxis lediglich erforderlich ist, die entsprechenden Kanäle zu kreuzen.

Insgesamt ergibt sich durch das erfindungsgemäße Verfahren eine optimale Nutzung der im Abgas der Brennkammer enthaltenen Wärme durch Vorwärmen der der Verbrennungskammer zugeführten Verbrennungsluft, womit sich bei einfacher Konstruktion der Maschine ein hoher Wirkungsgrad einstellt.

Gemäß einer Weiterbildung der Erfindung kann das durch Aufwärmen der Verbrennungsluft abgekühlte Abgas anschließend zur weiteren Wärmeausnutzung die den warmen Wärmetauscher umgebende Druckbehälterwand umströmen. Hiermit wird unter gleichzeitiger Steigerung des Wirkungsgrades auch eine Isolierung zwischen dem warmen Wärmetauscher und der Druckbehälterwand entbehrlich; außerdem entfällt ein separater Wärmetauscher für den Wärmeaustausch zwischen dem Abgas und beispielsweise der aufzuheizenden Flüssigkeit des warmen Wärmetauschers.

Die Wärme- und Kältemaschine zur Durchführung des erfindungsgemäßen Verfahrens ist gemäß einem weiteren Merkmal der Erfindung dadurch gekennzeichnet, daß der heiße Regenerator unmittelbar an der Innenwand des Druckbehälters angeordnet und dieser Teil der Druckbehälterwand im unteren Teilbereich unmittelbar vom Verbrennungsluftkanal und im oberen Teilbereich vom Abgaskanal umgeben ist, der seinerseits auf seiner Außenseite vom Verbrennungsluftkanal eingeschlossen ist.

In Weiterbildung der erfindungsgemäßen Wärme- und Kältemaschine wird mit der Erfindung schließlich vorgeschlagen, den im unteren Teilbereich der den Regenerator umgebenden Druckbehälterwand durch den Verbrennungsluftkanal von der Druckbehälterwand getrennten Abgaskanal anschließend unmittelbar an die den warmen Wärmetauscher umgebenden Druckbehälterwand anzulegen.

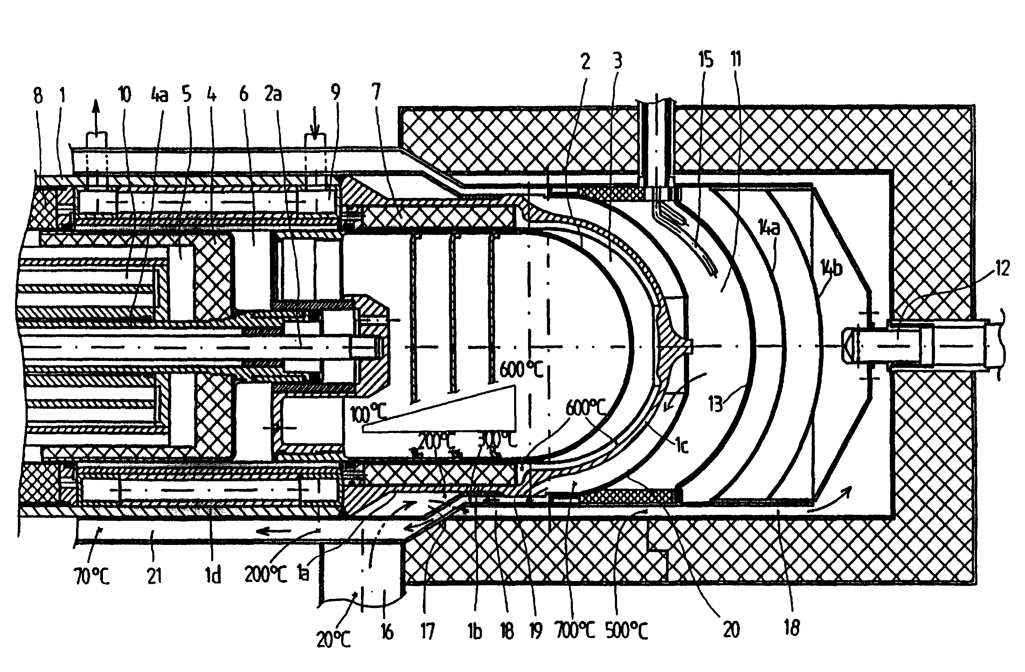

Auf der Zeichnung ist ein Ausführungsbeispiel einer nach dem erfindungsgemäßen Verfahren arbeitenden Wärme- und Kältemaschine anhand eines schematischen Längsschnittes dargestellt, der auch die Merkmale der erfindungsgemäßen Konstruktion erkennen läßt.

Auf der Zeichnung ist der obere Teil eines Druckbehälters 1 gezeigt, in dessen unterem, auf der Zeichnung nicht dargestellten Teil sich ein Getriebe befindet. Im oberen Teil des Druckbehälters 1 ist ein heißer Kolben 2 angeordnet, der ein heißes Arbeitsvolumen 3 begrenzt. Dieser heiße Kolben 2 steht über seine Kolbenstange 2a mit dem auf der Zeichnung nicht dargestellten Getriebe in Verbindung. Diese Kolbenstange 2a durchdringt einen kalten Kolben 4, der mittels einer hohlen, die Kolbenstange 2a umgebenden Kolbenstange 4a ebenfalls mit dem Getriebe verbunden ist. Im Inneren dieses kalten Kolbens 4 wird ein kaltes Arbeitsvolumen 5 gebildet. Zwischen sich bilden die Kolben 2 und 4 ein warmes Arbeitsvolumen 6.

Die drei Arbeitsvolumina 3, 6 und 5 sind unter Zwischenschaltung von Regeneratoren 7 und 8 sowie Wärmetauschern 9 und 10 miteinander verbunden. Während sowohl der heiße Regenerator 7 als auch der kalte Regenerator 8 und der warme Wärmetauscher 9 unmittelbar an der Innenseite des Druckbehälters 1 angeordnet sind, befindet sich der kalte Wärmetauscher 10 in einem feststehenden, von den Kolbenstangen 2a und 4a durchdrungenen Teil innerhalb des kalten Kolbens 4.

Die in Reihe mit den Wärmetauschern 9 und 10 geschalteten Regeneratoren 7 und 8 sind ringförmig ausgeführt und werden in axialer Richtung von dem unter hohem Druck stehenden Prozeßgas durchströmt. Dieses Prozeßgas beaufschlagt auch eine Seite der Wärmetauscher 9 und 10, die auf ihrer anderen Seite jeweils durch eine Flüssigkeit beaufschlagt werden. Der Ein- und Austritt dieser Flüssigkeiten sind in der Zeichnung durch Pfeile gekennzeichnet.

Die Wärmezufuhr zum heißen Arbeitsvolumen 3 geschieht beim dargestellten Ausführungsbeispiel durch Verbrennung eines fossilen Brennstoffes, vorzugsweise eines Gases in einer Brennkammer 11. Auf der Zeichnung sind die zugehörige Brennerdüse 12, ein die Reaktionsoberfläche der als Strahlungsbrenner ausgeführten Brennkammer 11 bildender Hohlkörper 13 sowie zwei Brenngasverteiler 14a und 14b zu erkennen, die für eine Vergleichmäßigung des Brenngases bei der Zufuhr zum Hohlkörper 13 sorgen. Schließlich zeigt die Zeichnung eine Zündelektrode 15 zum Zünden des der Brennkammer 11 zugeführten Gas-Luft-Gemisches.

Die für den Betrieb der Brennkammer 11 benötigte Verbrennungsluft wird der Maschine über einen Luftzufuhrstutzen 16 zugeführt und gelangt in einen ringförmigen Verbrennungsluftkanal 17, dessen radial innenliegende Wand durch einen Teil der Wand des Druckbehälters 1 gebildet wird, der auf der Zeichnung mit der Bezugsziffer la gekennzeichnet ist. In Strömungsrichtung der Verbrennungsluft geht dieser Verbrennungsluftkanal 17 in einen Ringkanal 18 über, der von dem sich an den Behälterwandteil 1a anschließenden Behälterwandteil 1b durch einen Abgaskanal 19 getrennt ist. In diesem Abgaskanal 19 strömt das aus der Brennkammer 11 kommende Abgas, das durch ein Leitblech 20 zwangsweise an die Außenfläche des gewölbten Kopfes 1c des Druckbehälters 1 herangeführt wird. Der im Bereich des Behälterwandteils 1b unmittelbar an der Behälterwand anliegende Abgaskanal 19 wird beim Übergang zum Behälterwandteil 1a von der Behälterwand weggeführt und geht anschließend in einen Kanalabschnitt 21 über, der den Verbrennungsluftkanal 17 auf seiner radial außenliegenden Seite umgibt und in Strömungsrichtung des Abgases anschließend an der Oberfläche des Behälterwandteils 1d anliegt, an dessen Innenseite der warme Wärmetauscher 9 angeordnet ist.

Durch diese Ausbildung und Ausgestaltung des in den Ringkanal 18 übergehenden Verbrennungsluftkanals 17 sowie des in den Kanalabschnitt 21 übergehenden Abgaskanals 19 wird erreicht, daß die Verbrennungsluft zur Kühlung des den unteren Teil des Regenerators 7 umgebenden Behälterwandteils la herangezogen wird, wogegen der den oberen Teil des Regenerators 7 umgebende Behälterwandteil 1b vom Abgas umströmt wird. In diesem Bereich wird das Abgas gleichzeitig durch die an der Außenseite des Abgasstromes im Gegenstrom geführte Verbrennungsluft gekühlt. Das auf diese Weise durch Aufwärmen der Verbrennungsluft abgekühlte Abgas umströmt anschließend den den warmen Wärmetauscher 9 umgebenden Behälterwandteil 1d, so daß auch in diesem Bereich dem Abgas noch Wärme entzogen wird.

In der Zeichnung ist das für den Betrieb des Regenerators 7 benötigte Temperaturprofil eingezeichnet. Es zeigt, daß die Temperatur im Regenerator 7 an dem dem heißen Arbeitsvolumen zugewandten Ende etwa 600°C beträgt und an dem dem warmen Arbeitsvolumen 6 zugewandten Ende etwa 100°C. Die mit etwa 20°C durch den Luftzufuhrstutzen 16 eintretende Verbrennungsluft wird im Verbrennungsluftkanal 17 auf etwa 200°C erwärmt und hat am Ende des Ringkanals 18 eine Temperatur von etwa 500°C. Das mit etwa 700°C die Brennkammer 11 verlassende Abgas wird im Bereich des Abgaskanals 19 auf etwa 300°C abgekühlt und hat beim Übergang vom Behälterwandteil 1a zum Behälterwandteil 1d eine Temperatur von etwa 200°C. Da dem Abgas im weiteren Bereich des Kanalabschnittes 21 weiter Wärme für den warmen Wärmetauscher 9 entzogen wird, wird das Abgas am Ende des auf der Zeichnung eingezeichneten Kanalabschnittes 21 auf eine Temperatur von etwa 70°C abgekühlt.

Durch die voranstehende Kühlung des Behälterwandteils la durch unmittelbares Beaufschlagen mit Verbrennungsluft und den anschließenden Wechsel des Verbrennungsluftstromes im Bereich des Behälterwandteils 1b auf die Außenseite des Abgasstromes wird das zum Betrieb des Regenerators 7 benötigte Temperaturprofil aufrechterhalten. Die hierdurch bewerkstelligte Vorwärmung der Verbrennungsluft durch Nutzung der im Abgas der Brennkammer 11 enthaltenen Wärme benötigt weder den zusätzlichen apparativen Aufwand eines Wärmetauschers, noch die Anordnung von Isolierungen des Druckbehältergehäuses im Bereich des Regenerators 7 und des Wärmetauschers 9. Weiterhin wird durch die Beaufschlagung des Behälterwandteils 1a durch die Verbrennungsluft verhindert, daß sich aufgrund von Wärmeleitung aus dem Kopf 1c des Druckbehälters 1 in Richtung auf das Behälterwandteil 1d Wärmeverluste ergeben, die den Wirkungsgrad der Maschine verschlechtern würden.

Die Zeichnung zeigt, daß die geschilderten Vorteile, die zu einer erheblichen Verbesserung des Wirkungsgrades der Maschine führen, mit einfachen konstruktiven Mitteln erreicht werden, wozu es lediglich erforderlich ist, die entsprechenden Wandstärken des Druckbehältergehäuses und Strömungsquerschnitte der Kanäle aufeinander und auf den Druck und die Temperatur des in diesem Teil der Maschine pulsierenden Prozeßgases abzustimmen.

### Bezugszeichenliste

- 1: Druckbehälter
- 1a: Behälterwandteil
- 1b: Behälterwandteil
- 1c: Kopf
- 1d: Behälterwandteil
- 2: heißer Kolben
- 2a: Kolbenstange
- 3: heißes Arbeitsvolumen
- 4: kalter Kolben
- 4a: Kolbenstange
- 5: kaltes Arbeitsvolumen
- 6: warmes Arbeitsvolumen
- 7: Regenerator (heiß)
- 8: Regenerator (kalt)
- 9: Wärmetauscher (warm)
- 10: Wärmetauscher (kalt)
- 11: Brennkammer
- 12: Brennerdüse
- 13: Hohlkörper
- 14a: Brenngasverteiler
- 14b: Brenngasverteiler
- 15: Zündelektrode
- 16: Luftzufuhrstutzen
- 17: Verbrennungsluftkanal
- 18: Ringkanal
- 19: Abgaskanal
- 20: Leitblech
- 21: Kanalabschnitt

## Patentansprüche

1. Verfahren zur Nutzung der im Abgas der Brennkammer (11) einer nach einem regenerativen Gaskreisprozeß arbeitenden Wärme- und Kältemaschine enthaltenen Wärme durch Vorwärmen der der Brennkammer (11) zugeführten Verbrennungsluft, wobei das aus dem heißen Arbeitsvolumen (3) verdrängte bzw. diesem Arbeitsvolumen (3) zugeführte Prozeßgas einen Regenerator (7) durchströmt, der innerhalb eines druckfesten Gehäuses bzw. Druck- behälters (1) im Bereich des heißen Kolbens (2) angeordnet ist, dadurch gekennzeichnet, daß unter Aufrechterhaltung des für den Betrieb des Regenerators (7) benötigten Temperaturprofils die Verbrennungsluft zu der dem unteren Teil des Temperaturprofils des Regenerators (7) entsprechenden Kühlung der den unteren Teil des Regenerators (7) umgebenden Druckbehälterwand (1a) herangezogen wird und daß zur Aufrechterhaltung des für den Regeneratorbetrieb erforderlichen oberen Teils des Temperaturprofils der obere Teil der den Regenerator (7) umgebenden Druckbehälterwand (1b) vom Abgas umströmt wird, wobei gleichzeitig in diesem Bereich dem Abgas Wärme durch die an der Außenseite des Abgasstromes im Gegenstrom geführte Verbrennungsluft entzogen wird.

2. Verfahren nach Anspruch 1, dadurch gekennzeichnet, daß das durch Aufwärmen der Verbrennungsluft abgekühlte Abgas anschließend zur weiteren Wärmeausnutzung die den warmen Wärmetauscher (9) umgebende Druckbehälterwand (1d) umströmt.

3. Wärme- und Kältemaschine mit zwei in einem druckdichten Gehäuse bzw. Druck- behälter (1) linear beweglich angeordneten Kolben (2, 4), die gemeinsam ein warmes Arbeitsvolumen (6) begrenzen und von denen der eine Kolben (2) im Gehäuse (1) ein heißes Arbeitsvolumen (3) und der andere Kolben (4) ein kaltes Arbeitsvolumen (5) begrenzt, wobei die drei Arbeitsvolumina (3, 5, 6) unter Zwischenschaltung von Regeneratoren (7, 8) und Wärmeübertragern (9, 10) miteinander verbunden sind, sowie mit Mitteln zur Nutzung der im Abgas enthaltenen Wärme durch Vorwärmen der einer Brennkammer (11) zugeführten Verbrennungsluft, dadurch gekennzeichnet, daß der heiße Regenerator (7) unmittelbar an der Innenwand des Druckbehälters (1) angeordnet und dieser Teil der Druckbehälterwand im unteren Teilbereich (1a) unmittelbar vom Verbrennungsluftkanal (17) und im oberen Teilbereich (1b) vom Abgaskanal (19) umgeben ist, der seinerseits auf seiner Außenseite vom Verbrennungsluftkanal (18) eingeschlossen ist.

4. Wärme- und Kältemaschine nach Anspruch 3, dadurch gekennzeichnet, daß der im unteren Teilbereich (1a) der den Regenerator (7) umgebenden Druckbehälterwand durch den Verbrennungsluftkanal (17) von der Druckbehälterwand getrennte Abgaskanal (21) anschließend unmittelbar an der den warmen Wärmetauscher (9) umgebenden Druckbehälterwand (1d) anliegt.

## Claims

1. Method for the utilization of the heat contained in the exhaust gas of the combustion chamber (11) of a thermal and refrigerating machine operating according to a regenerative gas circulation process, by the preheating of the combustion air supplied to the combustion chamber (11), the process gas displaced from the hot working volume (3) or supplied to this working volume (3) flowing through a regenerator (7) which is arranged within a pressure-resistant housing or pressure vessel (1) in the region of the hot piston (2), characterized in that, with the temperature profile required for operating the regenerator (7) being maintained, the combustion air is employed for cooling the pressure vessel wall (1a) surrounding the lower part of the regenerator (7), the said cooling corresponding to the lower part of the temperature profile of the regenerator (7), and in that, in order to maintain the upper part of the temperature profile, the said upper part being necessary for operating the regenerator, the exhaust gas flows round the upper part of the pressure vessel wall (1b) surrounding the regenerator (7), whilst at the same time, in this region, heat is extracted from the exhaust gas by the combustion air guided in countercurrent on the outside of the exhaust-gas stream.

2. Method according to Claim 1, characterized in that the exhaust gas cooled by the heating of the combustion air subsequently flows, for further heat utilization, round the pressure vessel wall (1d) surrounding the hot heat exchanger (9).

3. Thermal and refrigerating machine with two pistons (2, 4) which are arranged so as to be linearly movable in a pressure-tight housing or pressure vessel (1) and jointly delimit a hot working volume (6) and of which one piston (2) delimits a hot working volume (3) in the housing (1) and the other piston (4) delimits a cold working volume (5), the three working volumes (3, 5, 6) being connected to one another, with regenerators (7, 8) and heat exchangers (9, 10) being interposed, and with means for the utilization of the heat contained in the exhaust gas, by the preheating of the combustion air supplied to a combustion chamber (11), characterized in that the hot regenerator (7) is arranged directly on the inner wall of the pressure vessel (1) and this part of the pressure vessel wall is surrounded, in the lower part region (1a), directly by the combustion-air duct (17) and, in the upper part region (1b), by the exhaust-gas duct (19) which, in turn, is enclosed on its outside by the combustion-air duct (18).

4. Thermal and refrigerating machine according to Claim 3, characterized in that the exhaust-gas duct (21), separated from the pressure vessel wall by the combustion-air duct (17) in the lower part region (1a) of the pressure vessel wall surrounding the regenerator (7), subsequently rests directly against the pressure vessel wall (1d) surrounding the hot heat exchanger (9).

## Revendications

1. Procédé pour utiliser la chaleur contenue dans les gaz d'échappement du moteur à combustion interne (11) d'une machine thermique et frigorifique fonctionnant selon un procédé à circuit de gaz à régénération, par préchauffage de l'air comburant alimentant la chambre de combustion (11), le gaz de procédé refoulé du volume actif chaud (3) ou fourni à ce volume actif (3) traverse un régénérateur (7) logé à l'intérieur d'un boîtier ou réservoir de pression (1), au niveau du piston chaud (2),
caractérisé en ce que
• en maintenant le profil de température nécessaire au fonctionnement du régénérateur (7), on utilise l'air comburant pour refroidir la paroi de réservoir de pression (1a), entourant la partie inférieure du régénérateur (7) tournée vers la partie de profil de température inférieure du régénérateur (7), et
- pour maintenir la partie supérieure du profil de température nécessaire au mode de fonctionnement régénérateur, on balaye la partie supérieure de la paroi de réservoir de pression (1b) entourant le régénérateur (7) avec les gaz d'échappement, et
- en même temps dans cette zone on extrait la chaleur des gaz d'échappement par l'air comburant conduit sur le côté extérieur du flux de gaz d'échappement en contre-courant.

2. Procédé selon la revendication 1,
caractérisé en ce que
les gaz d'échappement refroidis par réchauffage de l'air comburant traversent ensuite la paroi de réservoir de pression (1d) entourant l'échangeur de chaleur chaud, (9) pour puiser encore plus de chaleur.

3. Machine thermique et frigorifique comportant deux pistons (2, 4) mobiles linéairement dans un boîtier étanche à la pression ou réservoir de pression (1), ces pistons délimitant en commun un volume actif chaud (6) et parmi ceux-ci, l'un des pistons (2) délimite dans le boîtier (1), un volume actif chaud (3) et l'autre piston (4), un volume actif froid (5), les trois volumes actifs (3, 5, 6) étant reliés entre-eux par interposition des régénérateurs (7, 8) et des échangeurs de chaleur (9, 10) ainsi que des moyens pour utiliser la chaleur des gaz d'échappement pour préchauffer l'air comburant alimentant une chambre de combustion (11),
caractérisée en ce que
le régénérateur chaud (7) est monté directement sur la paroi intérieure du réservoir de pression (1) et cette partie de la paroi de réservoir de pression est entourée dans la partie inférieure de paroi (1a), directement par le canal d'air comburant (17) et dans la zone partielle supérieure (1b), est entourée par le canal des gaz d'échappement (19), ce dernier étant inclu dans le côté extérieur du canal d'air de combustion (18).

4. Machine thermique et frigorifique selon la revendication 3,
caractérisée en ce que
le canal des gaz d'échappement (21) séparé de la paroi du réservoir de pression par le canal d'air comburant (17), dans la zone de partie inférieure (1a) de la paroi de réservoir de pression entourant le régénérateur (7), par le canal d'air comburant (17), est alors appliqué directement contre la paroi de réservoir de pression (1d) entourant l'échangeur de chaleur chaud (9).
